# EUROPEAN PATENT APPLICATION

(11) **EP 1 496 710 A1**
(43) Date of publication of application: **12.01.2005**
(21) Application number: 04015408.0
(22) Date of filing: 30.06.2004
(51) Int. Cl.: H04N 11/04, H04N 7/22

(54) **System and method for transmitting video signals**

(30) Priority: 11.07.2003 JP 2003195571
(71) Applicant: Pioneer Corporation, Meguro-ku, Tokyo (JP)
(72) Inventor: Nohara, Manabu, Ohta-ku Tokyo (JP); Ohkubo, Hideyuki, Ohta-ku Tokyo (JP); Soga, Yusuke, Ohta-ku Tokyo (JP)
(74) Representative: Manitz, Finsterwald & Partner GbR

(57) **Abstract**

A video signal transmission system which includes a transmitter and a receiver. The transmitter converts digital video signals into serial video data by time division multiplexing; generates header data in a cycle of a divided clock signal produced by dividing a reference clock signal of the digital video signals; and provides a transmission signal in synchronization with a transmitter system clock signal, the transmission signal including a train of blocks each including the header data and a predetermined amount of the serial video data in that order. The receiver receives the transmission signal provided via a cable; separates the serial video data in the received transmission signal into data pieces representing the three primary colors in accordance with the header data detected in the received transmission signal and generates a reproduced reference clock signal; and outputs the data pieces representing the three primary colors as the digital video signals in synchronization with the reproduced reference clock signal.

## Description

### BACKGROUND OF THE INVENTION

### 1. Field of the Invention

The present invention relates to a video signal transmission system for transmitting digital video signals representing three primary colors between a transmitter and a receiver via a cable.

### 2. Description of the Related Background Art

A digital image transmission technique, which is generally referred to as a DVI (Digital Visual Interface) technique, is used to transmit digital video signals respectively representing the three primary colors (red, green, and blue, or RGB) over cables (e.g., see Japanese Patent Application Kokai No. 2002-366340). The digital transmission technique requires four communication cables between a transmitter and a receiver. Three of the communication cables are used for digital video signals representing the three primary colors, respectively and the remaining one cable for a pixel clock signal in synchronization with the transmission rate of the video signals.

Metal cables could also be employed as the communication cables. However, since the transmission distance available by the metal cable is limited to about 10 meters, an optical fiber cable is required for transmission over the limitations of the metal cable.

However, using four optical fiber cables for transmission of such digital video signals would be costly, whereas metal cables could also be used but preferably less in number.

### SUMMARY OF THE INVENTION

It is an object of the present invention to provide a video signal transmission system for efficiently transmitting digital video signals representing the three primary colors through a single cable and a method for the same, as well as a transmitter and a receiver used for the same.

A video signal transmission system according to the present invention for transmitting digital video signals representing three primary colors, comprises: converting means for converting the digital video signals representing the three primary colors into serial video data by time division multiplexing; frequency dividing means for dividing a reference clock signal of the digital video signals to produce a divided clock signal; header generating means for generating header data in a cycle of the divided clock signal; transmitter system clock generating means for generating a transmitter system clock signal; transmission means for transmitting a transmission signal in synchronization with the transmitter system clock signal, the transmission signal including a train of blocks, each block including the header data and a predetermined amount of the serial video data in that order; a cable for carrying the transmission signal; reception means for receiving the transmission signal carried via the cable; reception clock generating means for generating a reception clock signal in synchronization with each bit of the transmission signal received by the reception means; header detecting means for detecting the header data in the transmission signal received by the reception means to generate a header detection signal; separating means for separating the serial video data in the transmission signal received by the reception means into data pieces representing the three primary colors in accordance with the header detection signal; multiplying means for multiplying the header detection signal to reproduce the reference clock signal and outputting the reproduced reference clock signal; and output means for outputting the data pieces representing the three primary colors separated by the separating means as the digital video signals representing the three primary colors in synchronization with the reproduced reference clock signal.

A transmitter according to the present invention for transmitting digital video signals representing three primary colors, comprises: converting means for converting the digital video signals representing the three primary colors into serial video data by time division multiplexing; frequency dividing means for dividing a reference clock signal of the digital video signals to produce a divided clock signal; header generating means for generating header data in a cycle of the divided clock signal; transmitter system clock generating means for generating a transmitter system clock signal; and transmission means for providing a transmission signal in synchronization with the transmitter system clock signal, the transmission signal including a train of blocks, each block including the header data and a predetermined amount of the serial video data in that order.

A receiver according to the present invention for receiving a transmission signal to reproduce digital video signals representing three primary colors, comprises: reception means for receiving the transmission signal; reception clock generating means for generating a reception clock signal in synchronization with each bit of the transmission signal received by the reception means; header detecting means for detecting header data in the transmission signal received by the reception means to generate a header detection signal; separating means for separating the serial video data in the transmission signal received by the reception means into data pieces representing the three primary colors in accordance with the header detection signal; multiplying means for multiplying the header detection signal to reproduce the reference clock signal and outputting the reproduced reference clock signal; and output means for outputting the data pieces representing the three primary colors separated by the separating means as the digital video signals representing the three primary colors in synchronization with the reproduced reference clock signal.

A video signal transmission method according to the present invention for transmitting digital video signals representing three primary colors, the method comprises, at a transmitter side, the steps of: converting the digital video signals representing the three primary colors into serial video data by time division multiplexing; dividing a reference clock signal of the digital video signals to produce a divided clock signal; generating header data in a cycle of the divided clock signal; generating a transmitter system clock signal; and producing a transmission signal in synchronization with the transmitter system clock signal, the transmission signal including a train of blocks, each block including the header data and a predetermined amount of the serial video data in that order, the transmission signal being then output to a cable, and at a receiver side, the steps of: receiving the transmission signal carried via the cable; generating a receiver system clock signal in synchronization with each bit of the received transmission signal; detecting the header data in the received transmission signal to generate a header detection signal; separating the serial video data in the received transmission signal into data pieces representing the three primary colors in accordance with the header detection signal; multiplying the header detection signal to reproduce the reference clock signal and outputting the reproduced reference clock signal; and outputting the data pieces representing the three primary colors as the digital video signals representing the three primary colors in synchronization with the reproduced reference clock signal.

### BRIEF DESCRIPTION OF THE DRAWINGS

Fig. 1 is a block diagram showing an RGB video signal transmission system according to the present invention;
Fig. 2 is a flowchart showing a control operation performed by a controller in the system of Fig. 1;
Fig. 3 is a view showing the timing of each clock signal and the structure of a transmitted signal;
Fig. 4 is a flowchart showing a control operation performed by a controller in the system of Fig. 1 according to another embodiment of the present invention;
Fig. 5 is a view showing the timing of each clock signal and the structure of a transmitted signal when the control operation of Fig. 4 is performed;
Fig. 6 is a block diagram showing an RGB video signal transmission system according to another embodiment of the present invention;
Fig. 7 is a flowchart showing a control operation performed by a controller in the system of Fig. 6;
Fig. 8 is a view showing the timing of each clock signal and the structure of a transmitted signal when the control operation of Fig. 6 is performed;
Fig. 9 is a block diagram showing an RGB video signal transmission system according to another embodiment of the present invention;
Fig. 10 is a flowchart showing a control operation performed by a controller in the system of Fig. 9;
Fig. 11 is a view showing the timing of each clock signal and the structure of a transmitted signal when the control operation of Fig. 10 is performed;
Fig. 12 is a flowchart showing a control operation performed by a controller in the system of Fig. 9 according to another embodiment of the present invention; and
Fig. 13 is a view showing the timing of each clock signal and the structure of a transmitted signal when the control operation of Fig. 12 is performed.

### DETAILED DESCRIPTION OF THE INVENTION

Now, embodiments of the present invention will be described below in more detail with reference to the accompanying drawings.

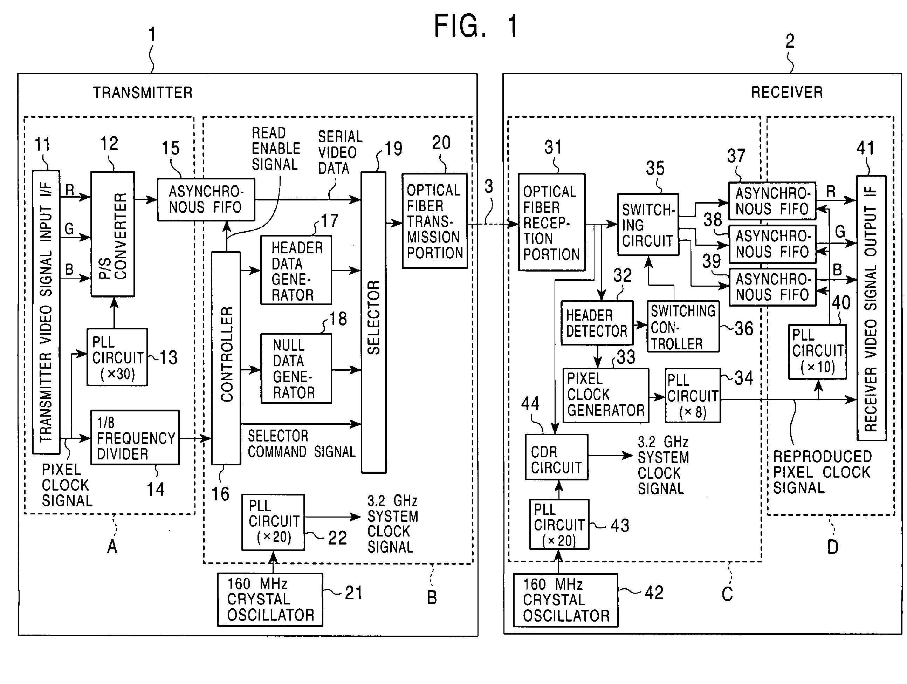

Fig. 1 shows an RGB video signal transmission system to which the present invention is applied. The RGB video signal transmission system includes a transmitter 1 and a receiver 2, with a single optical fiber cable 3 connecting between the transmitter 1 and the receiver 2.

The transmitter 1 includes a transmitter video signal input I/F (Interface) 11, a P/S (Parallel to Serial) converter 12, a PLL (Phase Locked Loop) circuit 13, a 1/8 frequency divider 14, an asynchronous FIFO 15, a controller 16, a header data generator 17, a null data generator 18, a selector 19, an optical fiber transmission portion 20, a crystal oscillator 21, and a PLL circuit 22.

A portion, generally indicated by a symbol "A" in Fig. 1, which includes the transmitter video signal input I/F 11, the P/S converter 12, the PLL circuit 13, and the 1/8 frequency divider 14, and an input portion of the asynchronous FIFO 15, operates in synchronization with a pixel clock signal discussed later.

On the other hand, a portion which is generally indicated by a symbol "B" in Fig. 1, including an output portion of the asynchronous FIFO 15, the controller 16, the header data generator 17, the null data generator 18, the selector 19, and the optical fiber transmission portion 20 operates in synchronization with a system clock signal of 3.2GHz that is supplied from the PLL circuit 22.

The transmitter video signal input I/F 11 receives digital R, G, and B video signals respectively representing the three primary colors (red, green, and blue, or RGB) and the pixel clock signal. The R, G, and B video signals are parallel signals each having 10 bits per one pixel. The pixel clock signal indicates the timing of the R, G, and B video signals for each pixel. The transmitter video signal input I/F 11 supplies the digital R, G, and B video signals to the P/S converter 12, and the pixel clock signal to the PLL circuit 13 and the 1/8 frequency divider 14.

The PLL circuit 13 multiplies the frequency of the pixel clock signal by a factor of 30 to produce a multiplied clock signal, which is then supplied to the P/S converter 12. The 1/8 frequency divider 14 divides the frequency of the pixel clock signal by 1/8 to produce a divided clock signal, which is then supplied to the controller 16. The P/S converter 12, which is connected to the video signal output of the transmitter video signal input I/F 11, converts the R, G, and B video signals into serial video data by time division multiplexing in accordance with the multiplied clock signal supplied from the PLL circuit 13.

The asynchronous FIFO 15, which is connected to the output of the P/S converter 12, receives and holds the serial video data supplied from the P/S converter 12 and then outputs the held video data in synchronization with a system clock signal of 3.2GHz in response to a read enable signal supplied from the controller 16.

The controller 16, including such as a microcomputer, is connected to the 1/8 frequency divider 14, the asynchronous FIFO 15, the header data generator 17, the null data generator 18, and the selector 19. The controller 16 controls the operation of each of the asynchronous FIFO 15, the header data generator 17, the null data generator 18, and the selector 19 in accordance with the divided clock signal from the 1/8 frequency divider 14 and the system clock signal. Although the timing of such operations will be described later, control signals include the aforementioned read enable signal generated for the asynchronous FIFO 15, a header generation command signal generated for the header data generator 17, a null generation command signal generated for the null data generator 18, and a selector command signal generated for the selector 19.

Upon reception of the header generation command signal supplied from the controller 16, the header data generator 17 supplies header data to the selector 19 in response to the header generation command signal. The header data has a predetermined number of bits (e.g., 8 bits) and a unique bit pattern.

Upon reception of the null generation command signal supplied from the controller 16, the null data generator 18 supplies null data to the selector 19 in response to the null generation command signal. All pieces of null data are indicative of zero. Upon reception of a null generation stop command signal supplied from the controller 16, the null data generator 18 stops generating null data.

In response to the selector command signal from the controller 16, the selector 19 selectively supplies one of the pieces of the serial video data output from the asynchronous FIFO 15, the header data output from the header data generator 17, and the null data output from the null data generator 18 to the optical fiber transmission portion 20.

The optical fiber transmission portion 20, which is connected to the optical fiber cable 3, converts data output from the selector 19 at a transmission rate of 3.2GHz into an optical signal, which is then sent to the optical fiber cable 3.

The PLL circuit 22 multiplies the frequency of an oscillation signal of 160MHz generated by the crystal oscillator 21 by a factor of 20 to produce the aforementioned system clock signal.

The receiver 2 includes an optical fiber reception portion 31, a header detector 32, a pixel clock generator 33, a PLL circuit 34, a switching circuit 35, a switching controller 36, asynchronous FIFOs 37 - 39, a PLL circuit 40, a video signal output IF 41, a crystal oscillator 42, a PLL circuit 43, and a CDR (Clock Data Recovery) circuit 44.

As shown generally by a symbol "C" in Fig. 1, a portion including the optical fiber reception portion 31, the header detector 32, the pixel clock generator 33, the PLL circuit 34, the switching circuit 35, the switching controller 36, input portions of the asynchronous FIFOs 37 - 39, the PLL circuit 43, and the CDR circuit 44 operates in synchronization with the system clock signal of 3.2GHz.

On the other hand, as shown generally by a symbol "D" in Fig. 1, a portion including output portions of the asynchronous FIFOs 37 - 39, the PLL circuit 40, and the video signal output IF 41 operates in synchronization with the pixel clock signal.

The optical fiber reception portion 31, which is connected to the optical fiber cable 3, receives the optical signal supplied via the optical fiber cable 3 and then converts the received optical signal into a digital signal (received data) for output. The data output of the optical fiber reception portion 31 is connected with the header detector 32, the switching circuit 35, and the CDR circuit 44.

The PLL circuit 43 multiplies the frequency of the oscillation signal of 160MHz generated by the crystal oscillator 42 by a factor of 20 to produce the clock signal of 3.2GHz.

The CDR circuit 44, formed as an IC chip, produces the system clock signal of 3.2GHz which is in phase with the received data supplied from the optical fiber reception portion 31 in response to the clock signal of 3.2GHz outputted from the PLL circuit 43. The system clock signal of 3.2GHz is used as the reference clock for the aforementioned portion within the receiver 2 to operate in synchronization with the system clock signal.

The header detector 32 detects the header data in the received data, supplied from the optical fiber reception portion 31, in synchronization with the system clock signal. The header detector 32 supplies a header detection signal indicative of the time of detecting the header data to the pixel clock generator 33 and the switching controller 36.

The pixel clock generator 33 generates a 1/8 pixel clock signal in synchronization with the header detection signal. The pixel clock generator 33 is connected at its output with the PLL circuit 34. The PLL circuit 34 multiplies the 1/8 pixel clock signal by a factor of 8 to produce a reproduced pixel clock signal, which is then supplied to the PLL circuit 40 and the video signal output IF 41. The PLL circuit 40 multiplies the reproduced pixel clock signal by a factor of 10 to produce a read clock signal.

In response to the header detection signal, the switching controller 36 produces an RGB switching signal indicative of the time of change in each piece of R, G, and B video data in the serial video data supplied from the optical fiber reception portion 31. That is, since each sequential order of the R, G, and B video data in the 240-bit serial video data is known in advance, the system clock signal pulses of 3.2GHz are counted with respect to the header detection signal as a reference to thereby produce the RGB switching signal.

The switching circuit 35, which is interposed between the output of the optical fiber reception portion 31 and each input of the asynchronous FIFOs 37 - 39, supplies the serial video data output from the optical fiber reception portion 31 selectively to one of the asynchronous FIFOs 37 - 39 in accordance with the RGB switching signal. That is, the switching circuit 35 supplies the R (red) serial video data of the serial video data to the asynchronous FIFO 37, the G (green) serial video data to the asynchronous FIFO 38, and B (blue) serial video data to the asynchronous FIFO 39.

Each of the asynchronous FIFOs 37 - 39 receives and holds the supplied serial video data to output the held serial video data in synchronization with the read clock signal produced by the PLL circuit 40.

The video signal output IF 41 outputs the R, G, and B video data supplied from the asynchronous FIFOs 37 - 39 as a 10-bit parallel video signal each for R, G, or B in synchronization with the reproduced pixel clock signal.

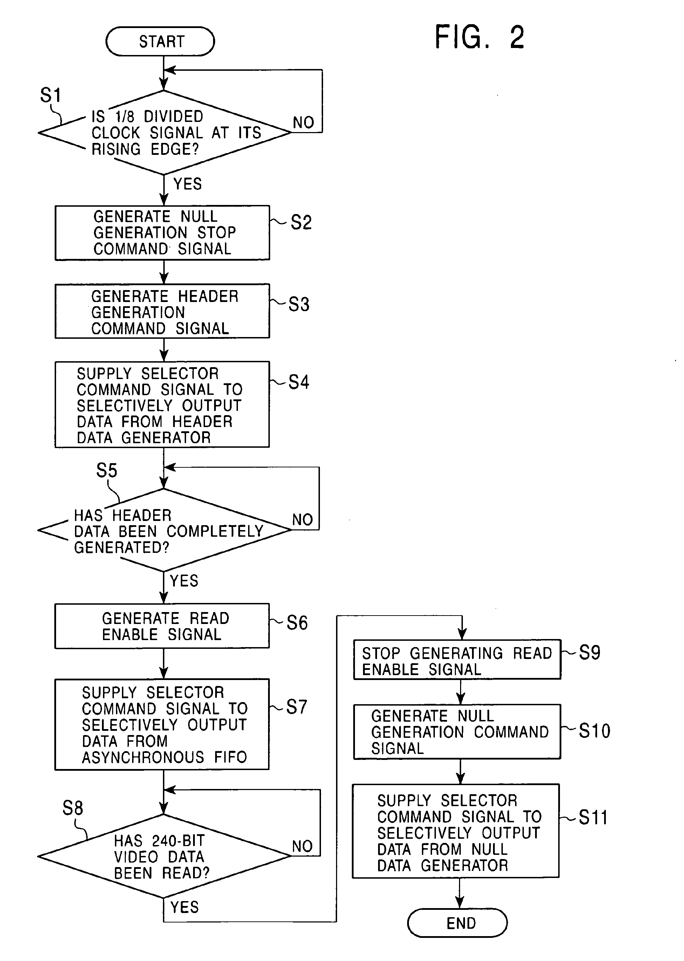

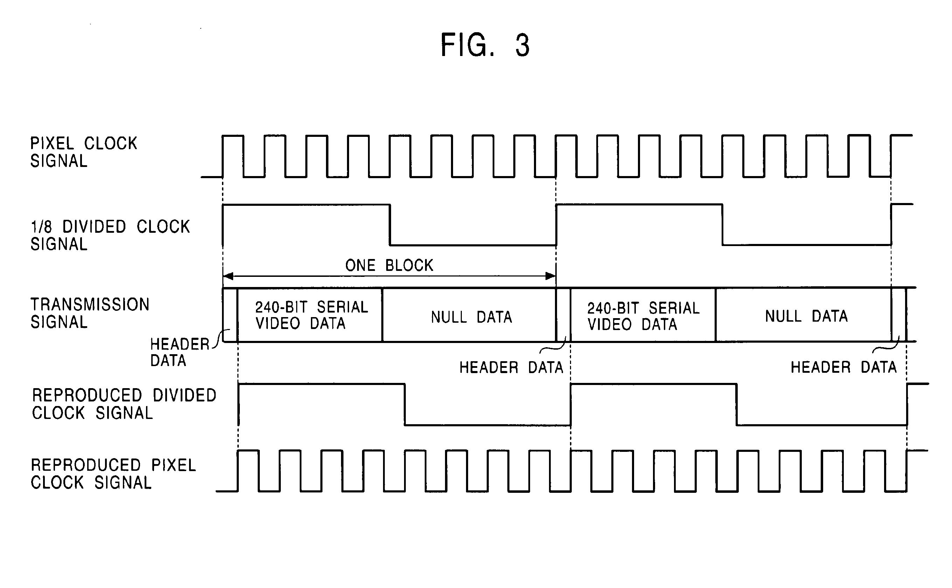

Now, the operation of the RGB video signal transmission system configured as such will be described with reference to Figs. 2 and 3. Fig. 2 is a flowchart showing the operation of the controller 16. Fig. 3 shows the pixel clock signal, the divided clock signal, the structure of the transmitted signal, the reproduced divided clock signal, and the reproduced pixel clock signal.

In the transmitter 1, the digital R, G, and B video signals and the pixel clock signal are supplied to the transmitter video signal input I/F 11, and then the P/S converter 12 converts the R, G, and B video signals into a serial signal or the serial video data. The P/S converter 12 is supplied from the PLL circuit 13 with the multiplied clock signal obtained by multiplying the pixel clock signal by a factor of 30, and is thus capable of changing 3 × 10 bits per one pixel for the three colors R, G, and B into the serial video data. The serial video data is sequentially held in the asynchronous FIFO 15.

The controller 16 is supplied from the 1/8 frequency divider 14 with the divided clock signal obtained by dividing the pixel clock signal by 1/8. Thus, in response to the rising edge of the divided clock signal, the controller 16 supplies the header generation command signal to the header data generator 17 (steps S1 and S3). At the same time, the controller 16 supplies the selector command signal for the selector 19 to selectively deliver the output data from the header data generator 17 (step S4). In response to the header generation command signal, the header data generator 17 immediately supplies the header data to the selector 19 in synchronization with the system clock signal of 3.2GHz. Then, the selector 19 supplies the header data to the optical fiber transmission portion 20. The header data is transmitted as an optical signal at a transmission rate of 3.2Gbps from the optical fiber transmission portion 20 to the optical fiber reception portion 31 via the optical fiber cable 3.

The null generation stop command signal is generated in the controller 16 in step S2 before the header generation command signal is produced as shown in Fig. 2. However, the command signal is ignored because the null data generator 18 has not produced null data yet in the initial condition.

When determining that the header data generator 17 has finished generating the header data ("Yes" in step S5), the controller 16 supplies the read enable signal to the asynchronous FIFO 15 (step S6). At the same time, the controller 16 supplies the selector command signal for the selector 19 to selectively deliver the output data from the asynchronous FIFO 15 (step S7). The asynchronous FIFO 15 delivers the held serial video data in synchronization with the system clock signal of 3.2GHz. The serial video data is supplied from the asynchronous FIFO 15 to the optical fiber transmission portion 20 via the selector 19. Furthermore, the serial video data is transmitted as an optical signal at a transmission rate of 3.2Gbps from the optical fiber transmission portion 20 to the optical fiber reception portion 31 via the optical fiber cable 3.

The serial video data to be transmitted has 3 × M × N bits per one block, where M is the number of bits per one pixel in each of the digital video signals respectively representing the three primary colors and N is the number of pixels of the digital video signal in each block. In this embodiment, the number of bits of the digital video signal is M=10 bits per one pixel and the number of pixels of the digital video signal is N=8 in each block, so that the serial video data has 240 bits per one block.

When the 240-bit serial video data is output from the asynchronous FIFO 15 ("Yes" in step S8), the controller 16 stops supplying the read enable signal to the asynchronous FIFO 15 (step S9). At the same time, the controller 16 supplies the null generation command signal to the null data generator 18 (step S10), and also supplies the selector command signal for the selector 19 to selectively deliver the output data from the null data generator 18 (step S11). In response to the null generation command signal, the null data generator 18 immediately supplies the null data to the selector 19 in synchronization with the system clock signal of 3.2GHz. The selector 19 supplies the null data to the optical fiber transmission portion 20. The null data is transmitted as an optical signal at a transmission rate of 3.2Gbps from the optical fiber transmission portion 20 to the optical fiber reception portion 31 via the optical fiber cable 3.

In response to the rising edge of the divided clock signal ("Yes" in step S1), the controller 16 supplies the null generation stop command signal to the null data generator 18 (step S2) and the header generation command signal to the header data generator 17 (step S3). At the same time, the controller 16 supplies the selector command signal for the selector 19 to selectively deliver the output data from the header data generator 17 (step S4). As described above, this allows the header data to be transmitted as an optical signal at a transmission rate of 3.2Gbps from the optical fiber transmission portion 20 to the optical fiber reception portion 31 via the optical fiber cable 3. Thereafter, the aforementioned operations are repeatedly performed in the transmitter 1. As shown in Fig. 3, the header data, the 240-bit serial video data, and the null data are sequenced in that order, the sequence being transmitted as one block of the transmitted signal. Each block is transmitted in packets.

In the receiver 2, the optical fiber reception portion 31 receives the optical signal supplied from the transmitter 1 via the optical fiber cable 3 for output as received data. The received data is supplied to the header detector 32, the switching circuit 35, and the CDR circuit 44. The CDR circuit 44 produces the system clock signal of 3.2GHz in phase with the received data. The header detector 32 detects the header data in the received data. The header detector 32 supplies the header detection signal to the pixel clock generator 33 and the switching controller 36 at the end of the header data.

The pixel clock generator 33 produces the 1/8 pixel clock signal (the reproduced divided clock signal) that rises in response to the header detection signal. That is, because the header data has been inserted in synchronization with the transmitter 1/8 pixel clock signal, the reproduced 1/8 pixel clock signal produced in the pixel clock generator 33 is synchronous with the transmitter 1/8 pixel clock signal. The PLL circuit 34 multiplies the reproduced 1/8 pixel clock signal by a factor of 8 to produce the reproduced pixel clock signal. The reproduced pixel clock signal is supplied to the video signal output IF 41, and multiplied at the PLL circuit 40 by a factor of 10 to be supplied to the asynchronous FIFOs 37 - 39 as a read clock signal.

On the other hand, upon reception of the aforementioned header detection signal, the switching controller 36 produces the RGB switching signal indicative of the time of change in each of R, G, and B video data in the received data output from the optical fiber reception portion 31. Accordingly, the RGB switching signal supplied to the switching circuit 35 allows the switching circuit 35 to supply R serial video data to the asynchronous FIFO 37 when the received data output from the optical fiber reception portion 31 is the R (red) serial video data. When the received data output from the optical fiber reception portion 31 is G (green) serial video data, the switching circuit 35 supplies the G serial video data to the asynchronous FIFO 38. When the received data output from the optical fiber reception portion 31 is B (blue) serial video data, the switching circuit 35 supplies the B serial video data to the asynchronous FIFO 39. Each of the asynchronous FIFOs 37 - 39 holds the serial video data supplied.

Each of the asynchronous FIFOs 37 - 39, supplied with the read clock signal from the PLL circuit 40, delivers the held serial video data bit by bit in synchronization with the corresponding read clock signal. The video signal output IF 41 receives 10-bit (one pixel) serial video data for each R, G, or B in one cycle of the reproduced pixel clock signal. Thus, the video signal output IF 41 can obtain the reproduced pixel clock signal as well as the digital R, G, and B video signals in synchronization therewith. These signals are equivalent to the pixel clock signal and the digital R, G, and B video signals supplied to the transmitter video signal input I/F 11.

Accordingly, even when the frequency of the transmitter pixel clock signal has changed due to the digital R, G, and B video signals to be transmitted, the receiver can obtain the reproduced pixel clock signal following the resulting frequency.

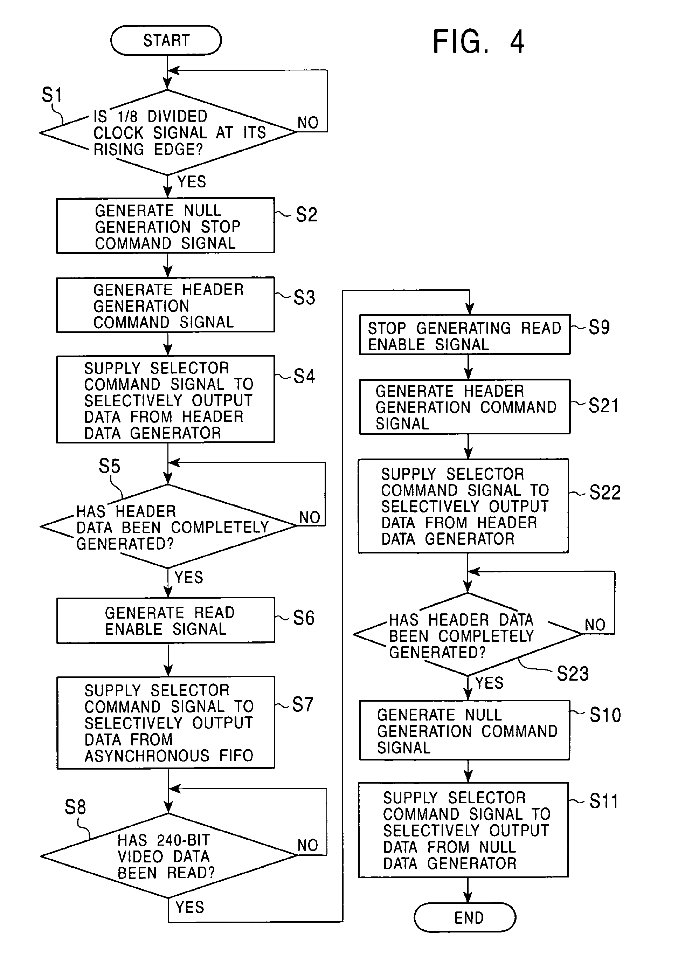

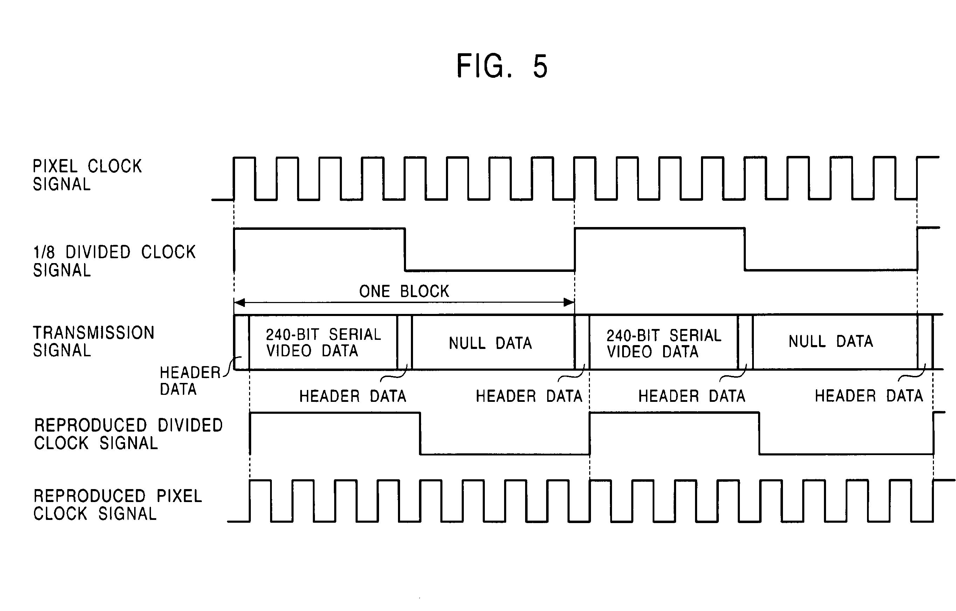

Fig. 4 is a flowchart showing the operation of the controller 16 according to another embodiment of the present invention. Fig. 5 shows the pixel clock signal, the divided clock signal, the structure of the transmitted signal, the reproduced divided clock signal, and the reproduced pixel clock signal, which are employed in the embodiment of Fig. 4. The RGB video signal transmission system according to this embodiment employs the system configuration of Fig. 1 as it is.

In Fig. 4, when the asynchronous FIFO 15 delivers the 240-bit serial video data ("Yes" in step S8), the controller 16 stops supplying the read enable signal to the asynchronous FIFO 15 (step S9) and supplies the header generation command signal to the header data generator 17 (step S21). At the same time, the controller 16 supplies the selector command signal for the selector 19 to selectively deliver the output data from the header data generator 17 (step S22). Thereafter, when the header data generator 17 has finished generating the header data ("Yes" in step S23), the controller 16 supplies the null generation command signal to the null data generator 18 (step S10) and supplies the selector command signal for the selector 19 to selectively deliver the output data from the null data generator 18 (step S11).

Accordingly, the transmitted signal is structured such that the header data is located before and after the 240-bit serial video data as shown in Fig. 5. Since the header data is transmitted twice each time the 240-bit serial video data is transmitted, it is ensured that the header detector 32 in the receiver 2 detects the header data.

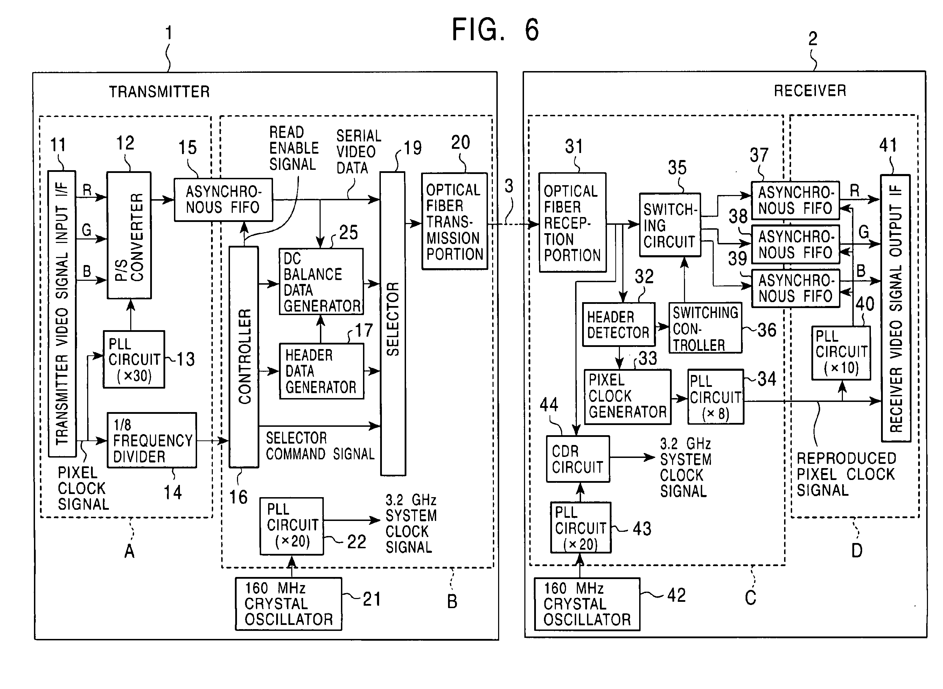

Fig. 6 illustrates an RGB video signal transmission system according to another embodiment of the present invention. The system shown in Fig. 6 includes a DC balance data generator 25 in place of the null data generator 18 of the system shown in Fig. 1. The DC balance data generator 25 generates DC balance data so as to balance with the number of each "0" and "1" bits included in the 240-bit serial video data and the header data before and after it. That is, when the header data, the 240-bit serial video data, the header data, and the DC balance data define one block, the DC balance data is generated such that the number of "0" bits is equal to the number of "1" bits within the block. The DC balance data generator 25, which is provided with an up/down count function, determines the DC balance data depending on the counter value that is obtained by increasing by one when counting a bit indicative of one and decreasing by one when counting a bit indicative of zero immediately before the DC balance data is produced block by block. The output of the DC balance data generator 25 is connected to the selector 19. The other configuration is the same as that of the system shown in Fig. 1.

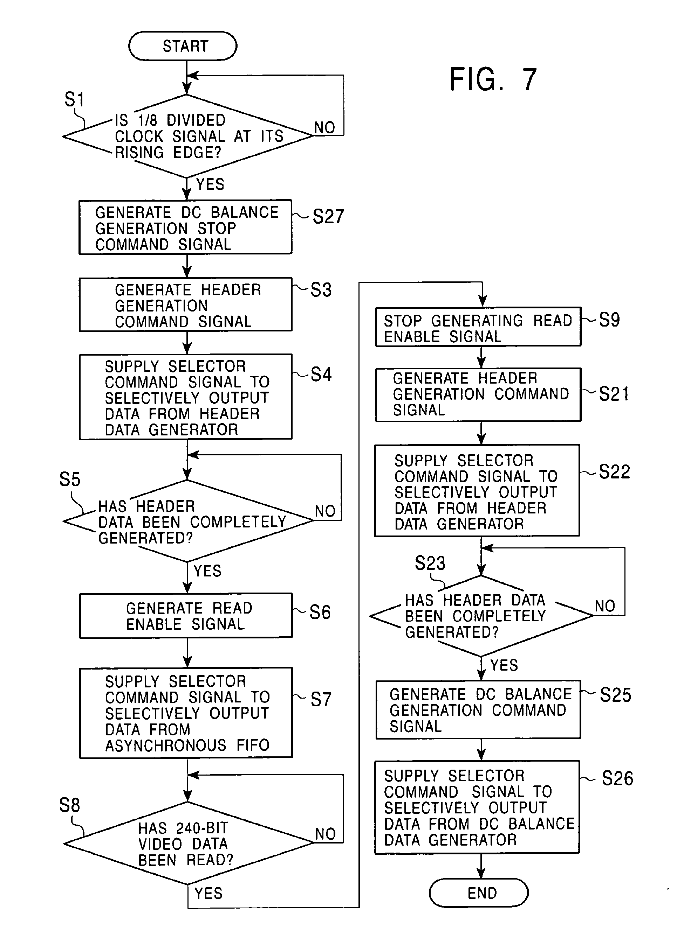

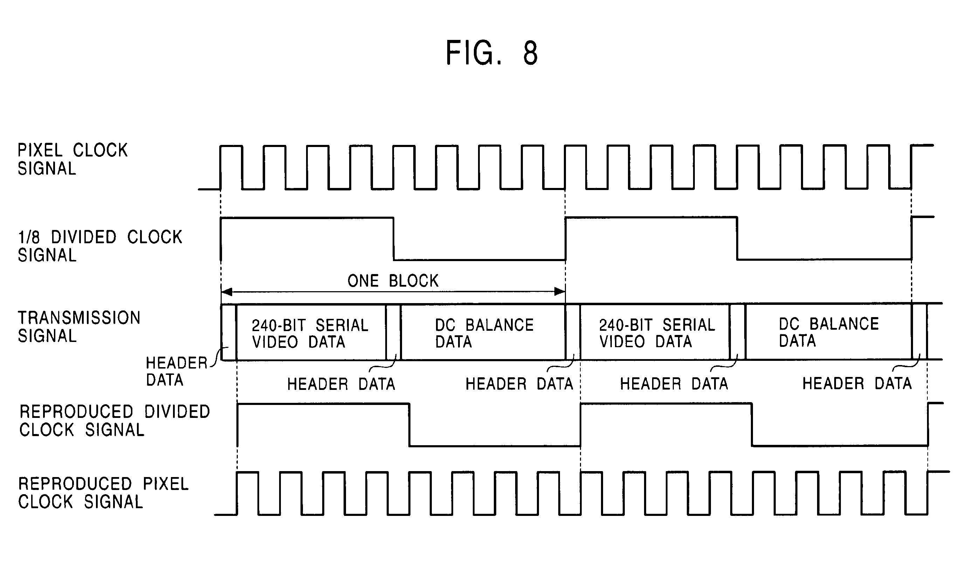

Fig. 7 is a flowchart showing the operation of the controller 16 according to the embodiment of Fig. 6. Fig. 8 shows the pixel clock signal, the divided clock signal, the structure of the transmitted signal, the reproduced divided clock signal, and the reproduced pixel clock signal according to the embodiment of Fig. 6.

Referring to Fig. 7, when the header data generator 17 has finished generating the header data in one block for the second time ("Yes" in step S23), the controller 16 supplies a DC balance generation command signal to the DC balance data generator 25 (step S25). Additionally, the controller 16 supplies the selector command signal for the selector 19 to selectively deliver the output data from the DC balance data generator 25 (step S26). Depending on the counter value available at that time, the DC balance data generator 25 determines the DC balance data, which is then supplied to the selector 19 in synchronization with the system clock signal of 3.2GHz. The selector 19 supplies the DC balance data to the optical fiber transmission portion 20. The DC balance data is transmitted as an optical signal at a transmission rate of 3.2Gbps from the optical fiber transmission portion 20 to the optical fiber reception portion 31 via the optical fiber cable 3.

In response to the subsequent rising edge of the of the divided clock signal ("Yes" in step S1), the controller 16 supplies a DC balance generation stop command signal to the DC balance data generator 25 (step S27) to stop generating the DC balance data.

The system shown in Fig. 6 can employ an AC coupling in optical fiber cable transmission.

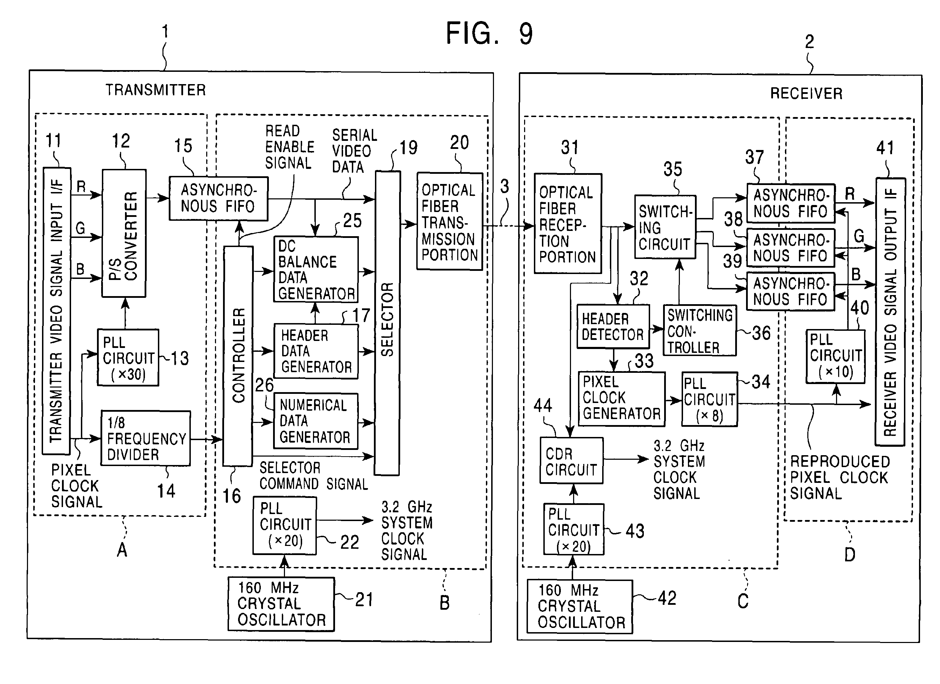

Fig. 9 shows an RGB video signal transmission system according to another embodiment of the present invention. The system shown in Fig. 9 has a numerical data generator 26 further added to the system shown in Fig. 6. The numerical data generator 26 generates numerical data indicative of the number of clocks in the 3.2GHz system clock signal appearing from the current point in time (the time at which the numerical data is generated) to the subsequent header data. The output of the numerical data generator 26 is connected to the selector 19. The other configuration is the same as that of the system shown in Fig. 6.

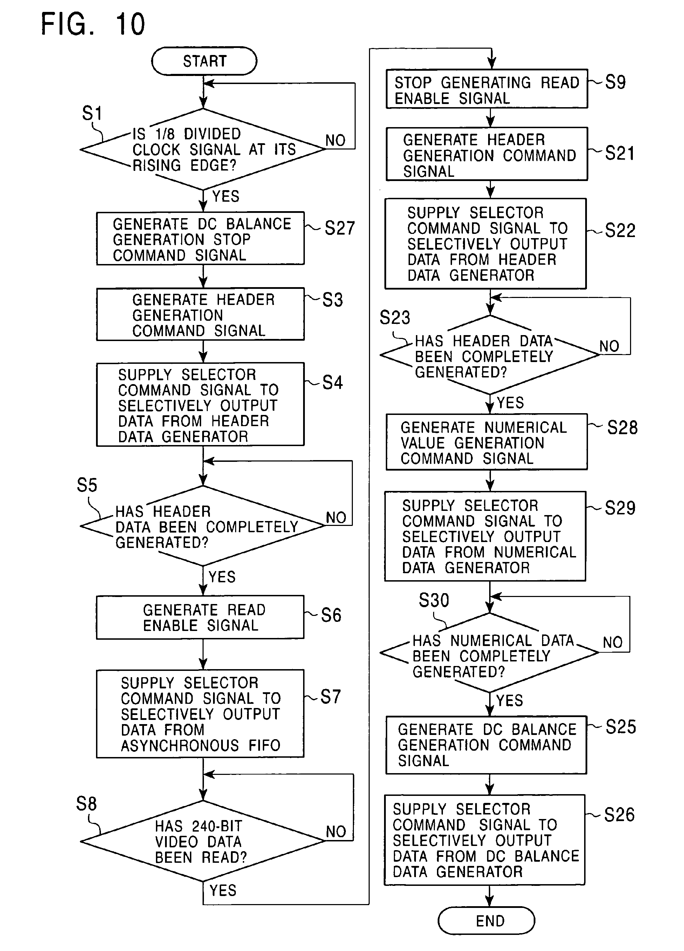

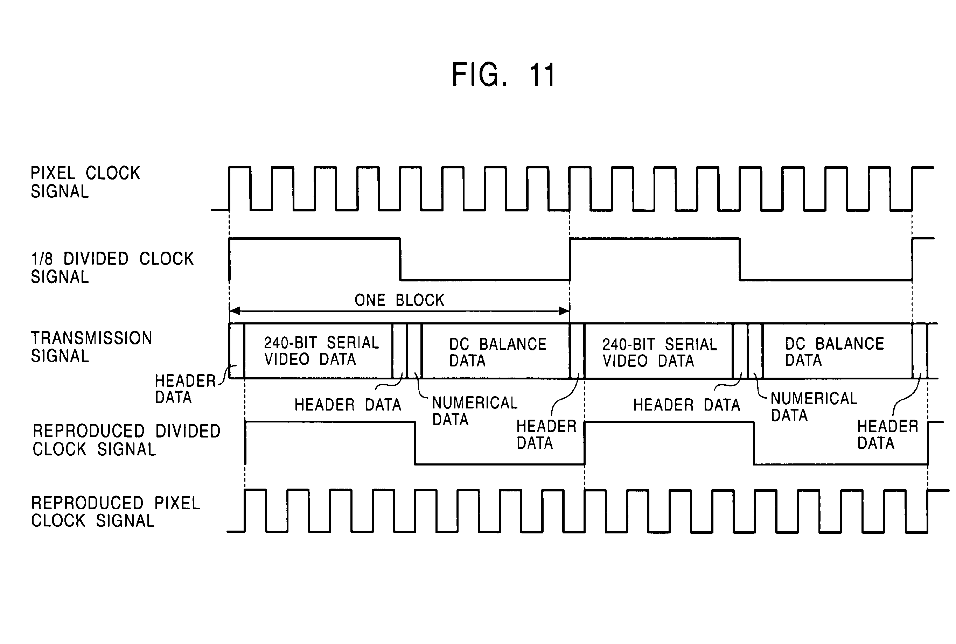

Fig. 10 is a flowchart showing the operation of the controller 16 according to the embodiment of Fig. 9. Fig. 11 shows the pixel clock signal, the divided clock signal, the structure of the transmitted signal, the reproduced divided clock signal, and the reproduced pixel clock signal according to the embodiment of Fig. 9.

Referring to Fig. 10, when having determined that the header data generator 17 finishes generating the header data in one block for the second time ("Yes" in step S23), the controller 16 supplies a numerical value generation command signal to the numerical data generator 26 (step S28). Additionally, the controller 16 supplies the selector command signal for the selector 19 to selectively deliver the output data from the numerical data generator 26 (step S29). Using the counter value obtained from the point in time of the rising edge of the divided clock signal in step S1, i.e., from the time at which the header data is generated to the current point in time, the numerical data generator 26 generates the numerical data from the current point in time to the subsequent header data in response to the numerical value generation command signal. The numerical data is transmitted as an optical signal at a transmission rate of 3.2Gbps from the optical fiber transmission portion 20 to the optical fiber reception portion 31 via the optical fiber cable 3. In accordance with the numerical data transmitted, the header detector 32 knows the point in time at which the next header data will be supplied, and thus can stop detecting the header data until then. This provides an advantage of reducing power consumption in the receiver because it is made unnecessary to always determine at every system clock whether the header data is present.

Referring to Fig. 10, when the controller 16 determines that the numerical data generator 26 has finished generating the numerical data ("Yes" in step S30), the process proceeds to the aforementioned steps S25 and S26.

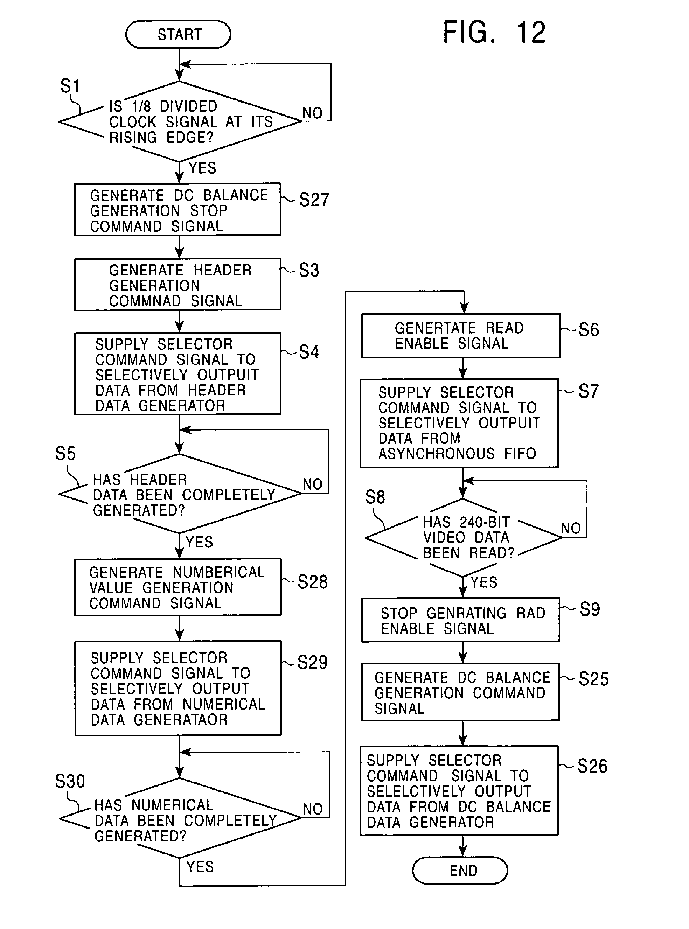

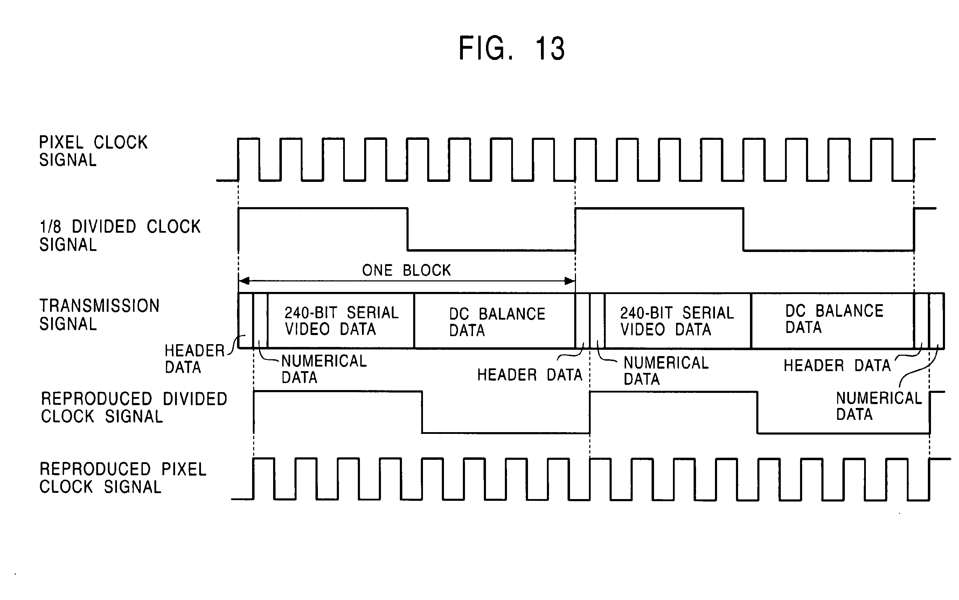

Fig. 12 is a flowchart showing the operation of the controller 16 according to another embodiment of the present invention. Fig. 13 shows the pixel clock signal, the divided clock signal, the structure of the transmitted signal, the reproduced divided clock signal, and the reproduced pixel clock signal according to the embodiment of Fig. 12. The RGB video signal transmission system according to this embodiment employs the system configuration of Fig. 9 as it is.

Referring to Fig. 12, when having determined that the header data generator 17 finishes generating the header data ("Yes" in step S5), the controller 16 supplies a numerical value generation command signal to the numerical data generator 26 (step S28). Additionally, the controller 16 supplies the selector command signal for the selector 19 to selectively deliver the output data from the numerical data generator 26 (step S29). Furthermore, when the controller 16 has determined that the numerical data generator 26 finishes generating the numerical data ("Yes" in step S30), the process proceeds to the aforementioned step S6 and the subsequent steps. As can be seen from Fig. 13, this embodiment has one piece of header data included in one block, and thus provides improved information transmission rates as compared with a case where two pieces of header data are included in one block. This embodiment also allows numerical data to be present immediately after the header data, the numerical data indicating the number of clocks to be counted until the next header data appears. This allows the header detector 32 in the receiver 2 to know the point in time at which the next header data will be supplied in accordance with the numerical data transmitted, thereby making it possible to stop detecting the header data for a long time period until then. Accordingly, it is possible to further reduce power consumption in the receiver.

In the aforementioned embodiments, optical fiber cables are employed as cables; however, metal cables can also be used.

Furthermore, the aforementioned embodiments employ a transmission rate of 3.2Gbps at which signals are transmitted between the transmitter 1 and the receiver 2; however, the present invention is not limited thereto. For example, fixed rates such as 5Gbps or 10Gbps or variable rates may also be used. On the other hand, the pixel clock signal may have any frequency from 25MHz to 165MHz according to the DVI standards.

Furthermore, in the aforementioned embodiments, the serial video data to be transmitted has 3 × M × N bits in one block where M=10 bits and N=8; however, the present invention is not limited to these M and N values.

Furthermore, in the aforementioned embodiments, R, G, and B video signals are employed as digital video signals representing the three primary colors, respectively; however, a video signal including a Y, Pb, and Pr components according to the color difference scheme may also be employed.

As described above, the present invention makes it possible to efficiently transmit R, G, and B video signals through a single cable.

## Claims

1. A video signal transmission system for transmitting digital video signals representing three primary colors, comprising:
converting means for converting said digital video signals representing the three primary colors into serial video data by time division multiplexing;
frequency dividing means for dividing a reference clock signal of said digital video signals to produce a divided clock signal;
header generating means for generating header data in a cycle of said divided clock signal;
transmitter system clock generating means for generating a transmitter system clock signal;
transmission means for transmitting a transmission signal in synchronization with said transmitter system clock signal, said transmission signal including a train of blocks, each block including said header data and a predetermined amount of said serial video data in that order;
a cable for carrying said transmission signal;
reception means for receiving said transmission signal carried via said cable;
reception clock generating means for generating a reception clock signal in synchronization with each bit of said transmission signal received by said reception means;
header detecting means for detecting said header data in said transmission signal received by said reception means to generate a header detection signal;
separating means for separating said serial video data in said transmission signal received by said reception means into data pieces representing the three primary colors in accordance with said header detection signal;
multiplying means for multiplying said header detection signal to reproduce said reference clock signal and outputting the reproduced reference clock signal; and
output means for outputting the data pieces representing the three primary colors separated by said separating means as said digital video signals representing the three primary colors in synchronization with said reproduced reference clock signal.

2. The video signal transmission system according to claim 1, wherein
said transmission means arranges said header data, said predetermined amount of serial video data, and then null data in that order in one block of said transmission signal.

3. The video signal transmission system according to claim 1, wherein
said transmission means arranges said header data, said predetermined amount of serial video data, said header data, and null data in that order in one block of said transmission signal.

4. The video signal transmission system according to claim 1, wherein
said transmission means arranges said header data, said predetermined amount of serial video data, and then DC balance data in that order in one block of said transmission signal, said DC balance data being made so that the number of bits indicative of one and the number of bits indicative of zero are equal to each other in one block.

5. The video signal transmission system according to claim 1, wherein
said transmission means arranges numerical data after said header data in one block of said transmission signal, said numerical data indicating a number of clocks of said transmitter system clock signal generated in a period by said header data in the subsequent block.

6. The video signal transmission system according to claim 5, wherein
said transmission means arranges said numerical data immediately after said header data.

7. The video signal transmission system according to claim 5, wherein
said transmission means arranges said numerical data after said predetermined amount of serial video data.

8. The video signal transmission system according to claim 1, wherein
said converting means allows first hold means to hold said serial video data, and
said transmission means reads said serial video data held in said first hold means, block by block, by said predetermined amount in synchronization with said transmitter system clock signal.

9. The video signal transmission system according to claim 1, wherein
said separating means allows second hold means to hold said data pieces representing the three primary colors, and
said output means reads said data pieces representing the three primary colors held in said second hold means, per unit of the number of bits in one pixel to obtain said digital video signals representing the three primary colors.

10. The video signal transmission system according to claim 1, wherein
said transmission means has control means for controlling transmission timing of each data including said header data and said predetermined amount of serial video data block by block in said transmission signal.

11. A transmitter for transmitting digital video signals representing three primary colors, comprising:
converting means for converting said digital video signals representing the three primary colors into serial video data by time division multiplexing;
frequency dividing means for dividing a reference clock signal of said digital video signals to produce a divided clock signal;
header generating means for generating header data in a cycle of said divided clock signal;
transmitter system clock generating means for generating a transmitter system clock signal; and
transmission means for providing a transmission signal in synchronization with said transmitter system clock signal, said transmission signal including a train of blocks, each block including said header data and a predetermined amount of said serial video data in that order.

12. A receiver for receiving a transmission signal to reproduce digital video signals representing three primary colors, comprising:
reception means for receiving said transmission signal;
reception clock generating means for generating a reception clock signal in synchronization with each bit of said transmission signal received by said reception means;
header detecting means for detecting header data in said transmission signal received by said reception means to generate a header detection signal;
separating means for separating said serial video data in said transmission signal received by said reception means into data pieces representing the three primary colors in accordance with said header detection signal;
multiplying means for multiplying said header detection signal to reproduce said reference clock signal and outputting the reproduced reference clock signal; and
output means for outputting the data pieces representing the three primary colors separated by said separating means as said digital video signals representing the three primary colors in synchronization with said reproduced reference clock signal.

13. A video signal transmission method for transmitting digital video signals representing three primary colors, the method comprising, at a transmitter side, the steps of:
converting said digital video signals representing the three primary colors into serial video data by time division multiplexing;
dividing a reference clock signal of said digital video signals to produce a divided clock signal;
generating header data in a cycle of said divided clock signal;
generating a transmitter system clock signal; and
producing a transmission signal in synchronization with said transmitter system clock signal, said transmission signal including a train of blocks, each block including said header data and a predetermined amount of said serial video data in that order, said transmission signal being then output to a cable, and
at a receiver side, the steps of:
receiving said transmission signal carried via said cable;
generating a receiver system clock signal in synchronization with each bit of said received transmission signal;
detecting said header data in said received transmission signal to generate a header detection signal;
separating said serial video data in said received transmission signal into data pieces representing the three primary colors in accordance with said header detection signal;
multiplying said header detection signal to reproduce said reference clock signal and outputting the reproduced reference clock signal; and
outputting said data pieces representing the three primary colors as said digital video signals representing the three primary colors in synchronization with said reproduced reference clock signal.
